(19) 

Europäisches
Patentamt

European
Patent Office

Office européen
des brevets

(11)  **EP 3 806 413 A1**

(12) **EUROPEAN PATENT APPLICATION**

(43) Date of publication:
**14.04.2021  Bulletin 2021/15**

(51) Int Cl.:
***H04L 25/02*** *(2006.01)*

(21) Application number: **19201805.9**

(22) Date of filing: **07.10.2019**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br>Designated Validation States:<br>**KH MA MD TN** | (72) Inventors:<br> • WAGNER, Chirstoph<br>  98693 Ilmenau (DE)<br> • RÖMER, Florian<br>  98693 Ilmenau (DE)<br> • SEMPER, Rudolf Sebastian<br>  98693 Ilmenau (DE)<br> • Del Galdo, Giovanni<br>  98693 Ilmenau (DE) |
| (71) Applicants:<br> • **FRAUNHOFER-GESELLSCHAFT zur Förderung<br>  der angewandten Forschung e.V.<br>  80686 München (DE)**<br> • **Technische Universität Ilmenau<br>  98693 Ilmenau (DE)** | (74) Representative: **Stöckeler, Ferdinand et al<br>  Schoppe, Zimmermann, Stöckeler<br>  Zinkler, Schenk & Partner mbB<br>  Patentanwälte<br>  Radlkoferstrasse 2<br>  81373 München (DE)** |

(54)  **METHOD FOR THE ACQUISITION OF IMPULSE RESPONSES, E.G. FOR ULTRA-WIDEBAND SYSTEMS**

(57)     There are disclosed techniques (e.g., apparatus, methods) for estimating an impulse response (30) of a linear system (4).

An apparatus (100) may be configured to generate (7) a transmit signal (23) on the basis of a first sequence. The apparatus (100) may be configured to obtain a receive signal (24) and to multiply (9) the receive signal (24) with a second sequence (25), to obtain a modified receive signal (26), wherein the second sequence (25) is different from the first sequence. The apparatus (100) may be configured to analog-to-digital, ADC, convert (11) an integration result (27) in order to obtain a sample value (28), the integration result (27) being based on an integration (10) of the modified receive signal (26) over a period ($T_s$) of time. The apparatus (100) may be configured to obtain an estimate (30) of the impulse response on the basis of a plurality (29) of sample values (28).

EP 3 806 413 A1

**Description**

I. INTRODUCTION

Present examples refer to apparatus, e.g. for estimating an impulse response of a linear system. Present examples also refer to methods, e.g. for estimating an impulse response of a linear system. Present examples also refer to non-transitory storage units storing instructions that, when executed by a processor, permit the processor to perform the steps of the method and functions of the apparatus. Further, examples refer to the acquisition of an impulse response, e.g. for ultra-wideband system.

A. Some features of the present examples

The document discloses a method and architecture to determine the time-varying impulse response of a linear system in a flexible manner. Its operation can be defined as exciting a linear system with a first period signal sequence. The response of the linear system to this excitation may be effectively then the circular convolution of the excitation first sequence with the impulse response of the linear system. This convolved signal may be then observed by mixing it with a second signal sequence. The mixture signal may be integrated in the analog domain over a certain time window to produce one observation, which may then be digitized for further processing. A preferred example includes an integrate-and-dump filter and a common analog-to-digital Converter (ADC) to implement this operation.

As will be explained in the subsequent passages, a proposed frontend processing scheme can be thought of as a generator for digital observations of linear combinations that are carried out in the analog domain. Each observation may take a different yet adjacent (i.e., without pauses) part of the analog linear system's output and combines it linearly with another similarly adjacent portion of the second sequence. As both, the first and second sequence are deterministic and generated in the frontend circuitry, it may be known which section of the linear system output was linearly combined in what way to form the digital observations made.

In a possible example, the first sequence may be chosen as Rademacher exhibiting a low crest-factor (e.g. close to 1), e.g. defined as the ratio of the peak amplitude to its RMS value over one period (other types of sequences are notwithstanding possible). A practical choice for such sequences may be a maximum length binary sequence (MLBS), which may be generated efficiently by simple shift registers with a feedback loop. This permits to achieve that each small time-domain section of the analog linear system's output contains a linear combination of the full linear systems' impulse response. This directly makes clear that each digital observation contains information about the full channel impulse response as well as it is made up of a linear combination of those dictionary entries. This is in particular true for the case that the observation time window leading to one digital observation is shorter than the first sequences' period, which directly corresponds to the duration of the linear systems' impulse response.

From the observations it is possible to retrieve the system impulse response by one of the many available methods for sparse recovery as the measurement kernel is known and linear. The advantages over prior-art methods are as follows:

Examples reduce the observation rate drastically compared to sampling the signal at full Nyquist rate.

Examples allow to change the operating parameters (e.g., the length and the spectral properties of the used sequences, the integration time, etc.). One can dynamically choose the desired trade-off between measurement rate (i.e. number of impulse responses / second) vs. signal-to-noise ratio (SNR) vs. sparsity of the signal (i.e., impulse response)

Operating parameters may be changed without any modification to the hardware and in response to e.g. previous measurements of the system, in an adaptive way.

A proposed architecture may be implemented in very cost-efficient hardware, allowing for unprecedented performance (i.e., in terms of accuracy, speed and stability) at a low cost.

B. Application background

Devices which measure the impulse response of a linear system are used in many applications (e.g., high level applications), such as

Telemetric systems
RADAR applications

non-destructive testing
detection and tracking of moving objects
radio frequency, RF, electronic measurements
search and rescue

C. Prior Art

Peyerl et. al. introduced a method for measuring linear system impulse responses in which the working principle is the excitation of a linear system with a periodic and dense sequence [1], [2], [3]. Observations are taken fulfilling the Nyquist criterion and at most the hardware requirements can be reduced by applying subsampling at the cost of the measurement rate (i.e., number of impulse response function (IRF)s per second) at equivalent SNR. Compared to the proposed examples, the method from Peyerl et. al. is inferior in that it does not introduce any compression not exploiting observable signal as its energy is simply not used in the subsampling step. The receive branch of the proposed architecture bears some similarities with [4], [5] that discloses an architecture where the receive signal is mixed with a sequence and then integrated and sampled at a lower rate. However, [4], [5] does not consider a first transmit sequence that is synchronous with the second receive sequence. As this is a key enabler for the reconstruction stage, it provides a significant novel and inventive step. Furthermore, the proposed architecture allows for adaptability without any notification to the hardware.

D. In respect to the prior art, some elements of at least some of the present examples may encompass:

Adaptability of the system architecture offering on-the-fly adjustment of measurement parameters which allows live-tuning to the scenario at hand
A trade-off between measurement rate (and thus Doppler sensitivity), signal-to-noise-ratio and signal diversity (sparsity) of the signal is explicitly offered and can be decided as a parameter
A use of integrated high-speed digital logic circuits and architectural reuse of the sequence generators allows for an inexpensive implementation without sacrificing circuit performance

References:

[1] P. PEYERL et al., "Verfahren zur Bestimmung der Impulsantwort eines breitbandigen linearen Systems und Meßanordnung zur Durchführung des Verfahrens," DE Patent 19 846 870, 1 25, 2001.
[2] -, "Verfahren zur Bestimmung der Impulsantwort eines breitbandigen linearen Systems und Meßanordnung zur Durchführung des Verfahrens," EP Patent 0 994 358, 4 19, 2000.
[3] -, "Method for determining the pulse response of a broad band linear system and a measuring circuit for carrying out the method," US Patent 6,272,441, 8 7, 2001.
[4] Y. ELDAR et al., "Sub-nyquist sampling of short pulses," US Patent 8,836,557, 9 16, 2014.
[5] -, "Multi-channel sampling of pulse streams at the rate of innovation," US Patent 8,717,210, 5 6, 2016.
[6] J. A. Tropp et al., "Beyond nyquist: Efficient sampling of sparse bandlimited signals," IEEE Transactions on Information Theory, vol. 56, no. 1, pp. 520-544, Jan 2010.
[7] S. W. Golomb, Shift Register Sequences. Laguna Hills, CA, USA: Aegean Park Press, 1981.

II. DETAILED PRESENTATION OF THE EXAMPLES

Summary

In examples, there is provided an apparatus for estimating an impulse response of a linear system,

wherein the apparatus is configured to generate a transmit signal on the basis of a first sequence,
wherein the apparatus is configured to obtain a receive signal and to multiply the receive signal with a second sequence, to obtain a modified receive signal, wherein the second sequence is different from the first sequence,
wherein the apparatus is configured to analog-to-digital, ADC, convert an integration result in order to obtain a sample value, the integration result being based on an integration of the modified receive signal over a period of time, and
wherein the apparatus is configured to obtain an estimate of the impulse response on the basis of a plurality of sample values.

Accordingly, it has been observed that the sampling rate of the ADC may be reduced as compared to the bandwidth of the linear system.

The first sequence and the second sequence may be generated from a common clock signal and/or are synchronized with a common clock signal).

The apparatus may perform a clock division by dividing the common system clock signal by a first divider factor parameter to obtain a sampling clock signal to control the ADC conversion and/or to define the period of time of the integration of the modified receive signal.

The apparatus may perform a clock division by dividing the common system clock signal, or a clock signal derived from the common system clock signal, by a second divider factor parameter, or a multiple of the second divider factor parameter, so as to obtain a frame clock signal to control the processing of the estimation of the impulse response and/or reset the generation of the second sequence.

The first sequence may be generated based on at least one first sequence definition parameter and/or the second sequence may be generated based on at least one second sequence definition parameter.

The apparatus may comprise an automated logic configured to select at least one of the following parameters:

the first divider factor parameter;
the second divider factor parameter;
the first sequence definition parameter; and
the second sequence definition parameter.

The automated logic may be configured to adaptively define at least one of the parameters based on at least one of a previous estimate, a priori knowledge about the linear system and linear system state information as obtained from other sources.

The automated logic may be configured to define the at least one of the parameters on the basis of a Doppler resolution, ambiguity range, number of non-zero components in the system's impulse response.

The apparatus may measure a distance of an object, wherein the receive signal is, or is associated to, the reflected version of the transmit signal,
wherein the apparatus is configured to measure a distance of the object on the basis of the estimate of the impulse response.

The first sequence may be associated to a first linear signal model, and the second sequence may be associated to a second linear model, so as to obtain the estimate of the impulse response on the basis of a relationship between the plurality of sample values, the first linear signal model, and the second linear model.

At least one of the first and second linear models may be a circulant linear model.

The first and second linear models may be described by a first and a second matrixes, wherein the product of the first and second matrixes form a linear behavioural model matrix, whose columns are such that any subset of up to K columns is linearly independent, wherein K is a number of unknown values of the impulse response to be determined.

The may obtain the estimate the impulse response of the linear system based on knowledge of the behavioural model matrix, by minimizing a sparsity-promoting function that maps its argument to a scalar number which represents the degree of sparsity, under the condition that a product of the linear behavioural model matrix and the reconstructed impulse response vector approximates or equals a sample vector defined by the plurality of samples.

In examples, there is provided a method for measuring the impulse response of a linear system comprising:

generating a transmit signal on the basis of a first sequence;
obtaining a receive signal;
mixing the receive signal with another signal based on a second sequence;
analog-to-digitally, ADC, convert the mixed signal, or an integrated version thereof;
estimating the impulse response on the basis of a plurality of digital obtained signals.

In examples, there is provided a non-transitory storage unit storing instruction which, when executed by a processor, cause the processor to:

generate a transmit signal on the basis of a first sequence,
obtain a receive signal and to multiply the receive signal with a second sequence, to obtain a modified receive signal, wherein the second sequence is different from the first sequence;
analog-to-digital, ADC, convert an integration result in order to obtain a sample value, the integration result being based on an integration of the modified receive signal over a period of time; and
obtain an estimate of the linear system impulse response on the basis of a plurality of sample values.

Figures:

Fig. 1    shows an apparatus according to an example.

Fig. 2    shows a measurement block according to an example and which may be a part of the apparatus of Fig. 1.

Fig. 3    shows a processing unit block according to an example and which may be a part of the apparatus of Fig. 1.

Fig. 4    shows an example of timing relationships.

Fig. 5    shows a method according to an example.

Fig. 6    shows an example of high-level application.

Fig. 7    shows examples of relationships between parameters.

Description

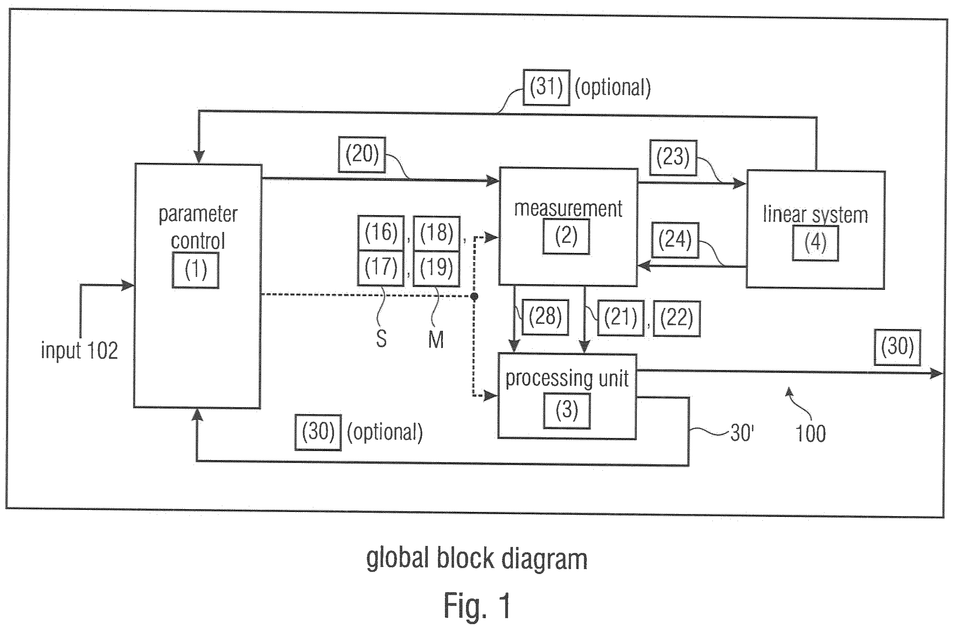

Figs. 1-3 relate to possible implementations of an apparatus 100 according to examples. The blocks of Figs. 1-3 may also be understood in some cases, as steps of methods (however, most of the features are expressed in terms of functional/structural features of the apparatus 100, even though it remains understood that also a method may be used for achieving the purpose of the apparatus 100). The following block may also be understood as blocks of code stored in a non-transitory storage unit. When the code is executed by a processor, a processor may perform the operations of the apparatus 100 and/or perform the steps of the method.

The apparatus 100 may include at least one receiving and/or transmitting antenna.

The apparatus 100 may be understood as being intended for measuring a physical property of a system 4 (the system 4 may be a linear system). The property may be, for example, the impulse response (which may be associated with the state of the channel). Here, reference is mostly made to radio frequency (RF) electromagnetic waves. In general terms, this system is intended for measuring properties associated to RF waves (e.g., for measuring distances, e.g., using a radar) and/or for measuring noise, etc. Ultra-wideband applications may be supported. In alternative examples, ultrasound signals may be used (e.g., for the purpose of measuring distances or for measuring the ultrasound channel) instead of RF signals. Hereinbelow, reference is mostly made to RF for brevity, even though it is possible to generalize the concepts to other kinds of linear systems. In some cases, the linear system 4 is part of the apparatus 100. In some cases, the linear system 4 is not part of the apparatus 100.

In a telemetric application (e.g. radar application), the linear system 4 may be understood as being associated to the path of a transmitted signal, which is reflected by an object, and the reflected signal is received by the apparatus 100. Accordingly, it is possible to estimate the distance of the object.

The apparatus 100 may include an input 102 through which a user (e.g., a human user or an automatic user, such as a high-level application or control) may command parameters.

The apparatus 100 may provide an output 30 (e.g. estimate) which may be information on the impulse response 30 as measured. The output 30 may be provided to high level applications (e.g., a radar application) and/or displayed on a display. The output 30 may be used for providing information about the noise in the channel and/or for measuring the state of the channel (e.g., for a mobile phone communication).

The apparatus 100 may be or include or be part of an automated logic. The automatic logic may be configured to adaptively define at least one parameter on the basis of a previous estimate (e.g., output 30), and/or on the basis of a priori knowledge about the linear system 4, and/or on the basis of channel state information (e.g. input 31) as obtained from other sources.

The apparatus 100 may comprise at least one of a parameter control block 1, a measurement block 2, and a processing unit 3.

The parameter control block 1 may be the element which receives the input 102. The parameters control block 1 may be adaptively based on the optional input 31 which may be channel state information, i.e., obtained in other ways (e.g., by other systems or units measuring the channel state information). In some cases, the parameter control block 1 may obtain feedback 30 (through feedback line 30') from the processing unit block 3 (the feedback 30 may be a previously estimated impulse response). This may be in case the automated logic (which may be the same parameter control block 1 or another block connected to the parameter control block 1) performs a feedback-based operation (e.g., a radar application).

As can be seen from Fig. 1, at least one parameter (e.g., 16, 17, 18, 19) may be provided to the measurement block 2 and/or to the processing unit 3. The at least one parameter may be at least partially conditioned by the input 30, 31 or 102 and/or may be defined by the parameter control block 1.

The measurement block 2 may be a unit which prepares and/or sends a transmit signal 23 onto the linear system 4 and receives a receive signal 24 as feedback from the linear system 4.

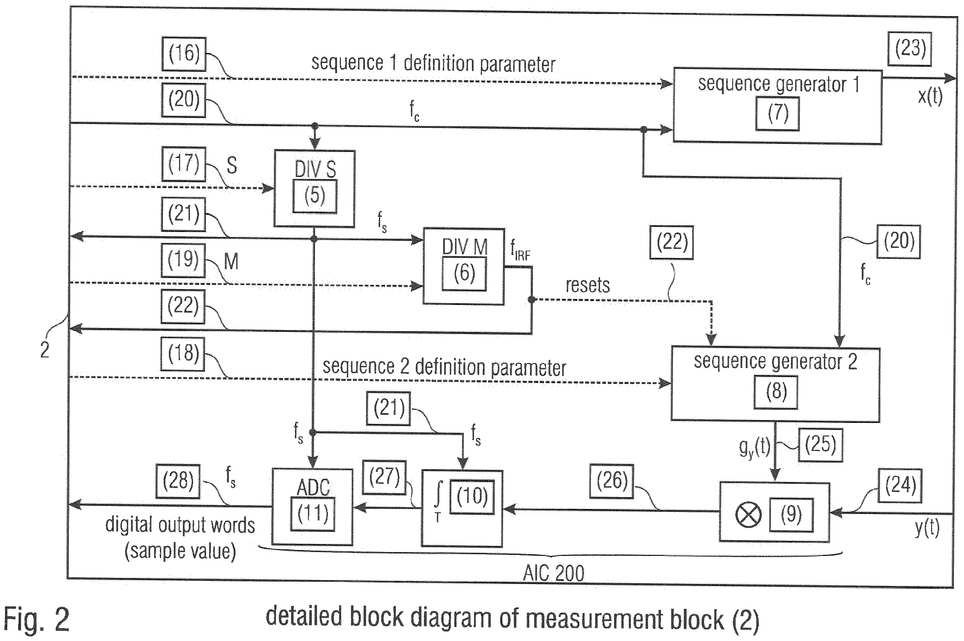

The transmit signal 23 (also indicated mathematically as x(t) or, with discrete notation, $x[n]$) may be generated by a "sequence generator 1 block" 7. (See also formulas (24) and (25) below.) The signal 23 or x(t) may be a periodic function and may have a period $T_x$. The period $T_x$ may be a multiple of a chip period $T_c$ (which may be the period of a common system clock signal 20) with chip rate $f_c = 1/T_c$. ($f_c$ is here also referred to as system clock rate, as other frequencies which are here discussed may be obtained by dividing $f_c$.) The transmit signal 23 may be based on (e.g., may be or may be generated by) a first sequence of (e.g., rectangular chips). Non-return-to-0, NRZ,-pulses, may be used. The chip length $T_c$ may be understood as being provided by the system clock signal 20 (which may be provided by the parameter control block 1). Accordingly, the chip rate $f_c$ may be provided to the sequence generator 1 block 7. As shown in Fig. 2, a parameter 16 (here also indicated as "sequence 1 definition parameter"), may be provided by the parameter control block 1. The sequence 1 definition parameter 16 may define the properties of the first sequence (or "sequence 1") from which the transmit signal 23 (or x(t)) is generated. The transmit signal 23 may therefore be defined to be according to the definitions of formulas (24) and (25) (other definitions are notwithstanding possible). The first sequence may be deterministic. The first sequence may be a Rademacher sequence, in some examples.

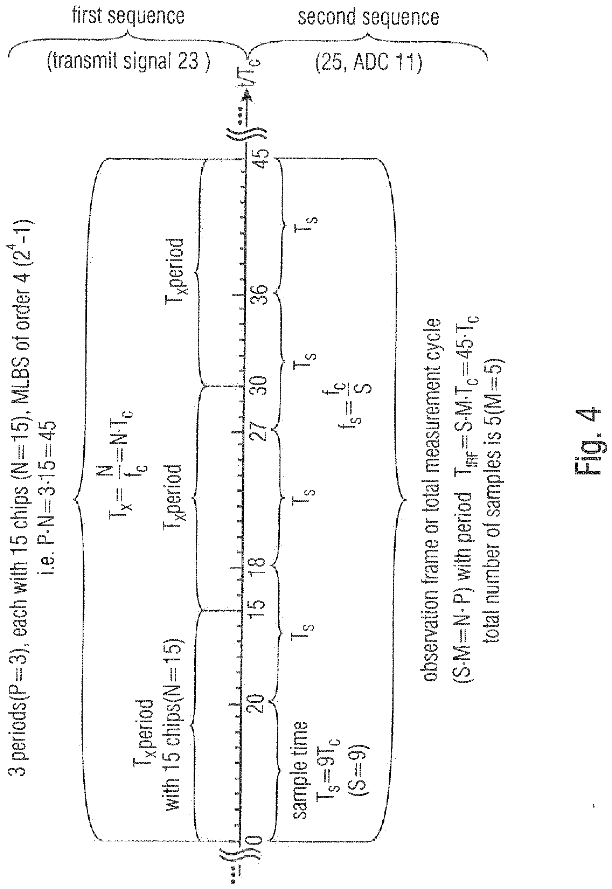

As can be seen in Fig. 4, the period $T_x$ of the transmit signal 23 according to the first sequence may include an integer number of chips (in this case 15) and is therefore a multiple of the chip period $T_c$. The transmit signal x(t) (23) may be periodical, an may be repeated in the subsequent periods $T_x$. The transmit signal x(t) may be univocally defined by the first sequence.

The receive signal 24 (mathematically indicated with y(t)) may be received by the apparatus 100 (e.g., through a receiving antenna) as a feedback from the linear system 4, e.g. to estimate the impulse response of the linear system 4. In radar, telemetric applications, the receive signal 24 may be a version of the signal reflected by the object whose distance is to be measured. In general terms, the receive signal 24 may be an analog signal, which is to be digitalized by an analog-to-digital, ADC, 11 converter. Should the ADC 11 try to obtain a digital copy of the receive signal 24, the sample rate of the ADC 11 should be at least twice as much of the chip rate $f_c$.

However, at least with the present examples, the sample rate $f_s$ controlling the ADC can be sensibly smaller than the chip rate $f_c$.

According to examples, an analog-to-information converter (AIC) 200 has been defined which provides a plurality of digital output words 28 from the receive signal 24 (or an analogically processed version 27 of the receive signal 24). Each of the digital output words 28 may be output by the AIC 200 at a frequency $f_s$ (sample rate of the ADC 11) which is less than the chip rate $f_c$ (here, $f_s = \dfrac{f_c}{S}$ with S>1). It will be shown that a plurality of digital words (e.g., vector, sample vector, measurement data vector, etc.) may provide a complete information on the impulse response, which may be subsequently processed to estimate the impulse response. Hence, the AIC 200 may be understood as providing information on the impulse response from the analog input signal (or an analogically processed version thereof).

The AIC 200 may include at least one of a mixer block 9 (e.g. analog mixer), an integrator 10 (e.g. an analog integrator), and an ADC 11.

The mixer block 9 may multiply (e.g., scale) the receive signal 24 by a second sequence 25 (mathematically indicated with $q_y(t)$). The mixed signal 26 (mathematically indicated with $y_m(t)$ and an example of which is in formula (16) below) may be provided to an integrator block 10.

The integrator block 10 may be an analog integrator. An integration result 27 (mathematically indicated with $\bar{y}_m(t)$, a formula of which is indicated in equation (30)), may subsequently be converted into digital signals (words, observations) 28 through an ADC 11. The ADC 11 may provide digital samples at the sample rate $f_s$, with $f_s < f_c$. The sample time $T_s = 1/f_s$ is therefore greater than the chip time $T_c$. The sample time $T_s$ may be a multiple of the chip time $T_c$, i.e. $T_s = S \cdot T_c$ (in Fig. 4, the sample time $T_s$ is 9 times the chip time $T_c$).

For the ADC 11 and the integrator block 10, a sample frequency $f_s$ may be provided by a clock divider block 5. A sampling clock signal 21 may be provided at the sampling clock rate $f_s$ which may be obtained by an integer division of the chip frequency (system clock) $f_c$. The clock divider block 5 may be controlled by a parameter 17 (mathematically indicated with S), indicating that the sampling period $T_s$ is S times greater than the chip time $T_c$ (in Fig. 4, S = 9, $T_s = S \cdot T_c = 9 \cdot T_c$). Therefore, a digital value will be output by the ADC 11 every $T_s$, and/or the integrator block 10 will be reset every $T_s$. Hence, $T_s$ also represents the period of time over which the analog integration is performed at the integrator block 10.

As explained above, the mixed signal 26 (which may be input to the integrator block 10) may be obtained by analogically scaling the receive signal 24 by the second sequence (also indicate with "sequence 2") numbered with 25. The second sequence 25 may be generated by a "sequence generator 2" block 8. The sequence generator 2 block 8 may be synchronized by the clock signal 20 (chip rate) and, therefore, the second sequence 25 may be in phase with the transmitter signal 23. The second sequence 25 may include a plurality of chips whose length $T_c$ may be the same of the chips generated for the first sequence (and for the transmit signal 23) at the sequence generator 1 block 7. The second sequence 25 may be deterministic. The second sequence 25 may be pseudo random. The second sequence 25 may be a Rademacher sequence. The second sequence 25 may be different from the first sequence and/or may have a different period than the period of the first sequence.

A complete measurement cycle may include an integer number $M$ of observations (each observation being a digital sample, or word, as generated by the ADC 11 during a sample time $T_s$). The integer number $M$ may therefore be understood as the number of observations that is necessary for obtaining a complete information on the impulse response (this may be application specific). The integer number $M$ may be understood as indicating the number of entries of the sample vector b (29). In order to obtain the complete sample vector (i.e., in order to carry out all the measurements that permit to obtain the measurement of the impulse response), $M$ consecutive observations are to be performed.

In Fig. 4, an observation frame or total measurement cycle takes a time length $T_{IRF}$ (which in this case is two times the sampling rate, in the sense that the complete information on the impulse response is obtained from two subsequent words at the output 28 of the ADC 11). The number of observations necessary for obtaining the information of the impulse response is, in general, an integer multiple of the sample time $T_s$. It may be possible to apply the relationship

$$M \cdot S = N \cdot P.$$

Accordingly, a "sample vector" 29 (mathematically indicated with b) may be obtained from a sequence of $M$ consecutive words 28 obtained from the ADC 11 (or AIC 200).

Here:

$M$ ("second divider factor parameter" 19) may be the integer number of samples output by the analog-to-digital conversion (ADC 11) for obtaining the sample vector (29, b);

S ("first divider factor parameter" 17) may be the integer number of chips (length $S \cdot T_C$) for the time length $T_s$ necessary for obtaining one sample at the ADC (11);

P may be the number of periods ($T_x$) of the first sequence in a complete observation frame; and

N may be the number of chips ($N \cdot T_c$) for each period in the first sequence.

In examples, it is necessary to have a number $M$ of digital samples (words) 28 for obtaining information on the channel impulse response (in Fig. 4, $M = 5$). It will be necessary a digital output word including $M$ digital sampled values 28 as obtained by the ADC 11.

Fig. 2 shows a clock divider block 6 which may be controlled by the parameter 19 ($M$). The clock divider block 6 may be input by the sampling clock signal 21 (sampling rate $f_s$), and output a frame clock signal 22 at the frequency $f_{IRF}$ (frame clock rate). $f_{IRF}$ may be a submultiple of the sampling rate $f_s$ (i.e. $f_{IRF} = f_s/M$). Basically, the frame clock rate 22 may be understood as following the relationship $f_{IRF} = \frac{f_c}{S \cdot M}$. Therefore, in another example, block 6, instead of being input by the sampling clock signal 21, may be input by the system clock 20 (at the chip rate $f_c$) and be obtained by dividing chip rate $f_c$ by $M \cdot S$, for example.

In examples, the first sequence and/or the transmit signal 23 and the second sequence 25 may be generated from a common system clock signal 20 at the clock rate $f_c$. Therefore, the chips of the first sequence, the transmit signal 23 and the second sequence 25 may result to be synchronized (e.g., same length and phase zero). In particular, at least one of the following clock divisions may be performed:

a clock division (at block 5) obtained by dividing the common system clock signal (20) by a first divider factor parameter (17, S) to obtain a sampling clock signal (21, $f_s$) to control the ADC conversion (11) and/or to define the period ($T_s$) of time of the integration (10) of the modified receive signal (26); and

clock division (block 6) by dividing the common system clock signal (20, $f_c$), or a clock signal (21, $f_s$) derived from the common system clock signal (20), by a second divider factor parameter (19, M), or a multiple of the second divider factor parameter (19, M), so as to obtain a frame clock signal (22, $f_{IRF}$) to control the processing (15) of the estimation of the impulse response (30) and/or reset the generation of the second sequence (25).

More in general, at least one of the following assumptions may hold:

the ADC 11 may be clocked in synchronism to the system clock (20, $f_c$) that drives the sequence generator for the transmit sequence 1;
the sequence generator 2 block 8 is in synchronism to the system clock (20, $f_c$);
the ADC 11 and the sequence generator 2 block 8 are in synchronism to each other.

The frame clock signal 22 at the frequency $f_{IRF}$ may be understood as indicating the rate at which an information regarding the impulse response may be actually obtained (the information being constituted by $M$ words). While the digital value (word) 28 may be obtained by the ADC 11 at the sampling rate $f_s$, the sample vectors 29 (b) may be obtained at the frame rate $f_{IRF} = f_s / M$. The frame clock signal 22 may be input to the sequence generator 2 block 8 for resetting the sequence 25.

In general terms, it is possible to see that the information output by the AIC 200 (and/or the words output by the ADC 11) may be conditioned by at least one of the following parameters:

the first divider factor parameter (17, S);
the second divider factor parameter (19, M);
the first sequence definition parameter (16); and
the second sequence definition parameter (18).

At least one of these parameters may be selected (e.g., by a user e.g. manually though input 102) and/or at least one of these parameters may be adaptively defined by the automated logic (which may be include in block 1 or may include block 1 or may be connected to block 1), e.g., on the basis of feedback 30 or 31.

It has been understood that the first sequence defining the transmit signal 23 may be associated to a first linear signal model, and the second sequence 25 to be mixed to the receive signal 24 may be associated to a first linear signal model (signal based model) and a second linear signal model (measurement model), respectively. It has also been understood that the first linear signal model may be embodied by a matrix $D$, which may be associated to the first sequence. Analogously, it has been understood that the second linear signal model may be embodied by a matrix $\phi$, which may be associated to the second sequence 25. It has also been understood that the first linear model and/or the second linear model (in particular, the first matrix and/or the second matrix) may be a circulant linear model (in particular, a circulant matrix). By intelligently processing the information as output by the AIC 200 (e.g., vector b), and by making use of the first and second linear models, it will be possible to estimate the impulse response 30.

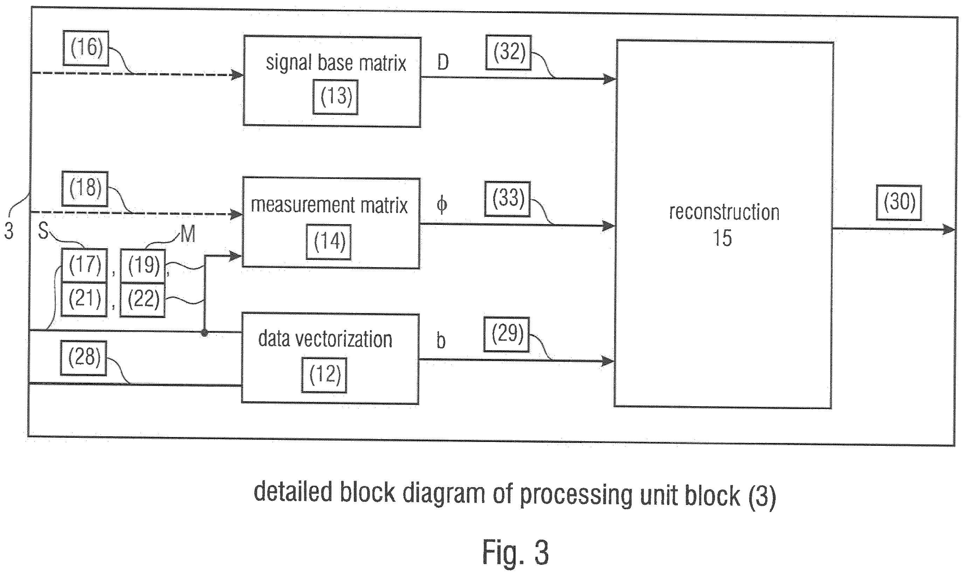

Fig. 3 shows an example of the processing unit 3. As can be seen, a reconstruction block 15 may provide an estimation 30 of the impulse response (or another information associated to or derived from the impulse response). The reconstruction block 15 may be input by at least one of:

1. information 32 (e.g. first linear signal model, e.g. matrix D) associated to the transmit signal 23 generated by the sequence generator 1 (which may be conditioned by the sequence 1 definition parameter 16 which has defined the first sequence);
2. information 33 (e.g. second linear signal model, e.g. matrix $\phi$) associated to the second sequence 25 as generated by the sequence generator 2 block 8 (and which may be conditioned by the sequence 2 definition parameter 18 which has contributed to define the second sequence 25, and/or by parameters S or 17, $M$ or 19 and the sampling rate $f_s$ or 21 and the frame clock rate or $f_{IRF}$ 22); and
3. information 29 (e.g. vector b) associated to the information 28 obtained from the AIC 200 (which may include the digital output words 28 as obtained by the AIC 200 and may also include at least one of the parameters S or 17, $M$ or 19 and the sampling rate $f_s$ or 21 and the frame rate or $F_{IRF}$ 22).

On the basis of the information 32, 33, and 29, the impulse response 30 may be reconstructed.

The matrix D may be a matrix $N \times N$, with $N$ rows and $N$ columns ($N$ being the number of chips for each period $T_x$ in the first sequence). The matrix $D$ may be a circulant matrix. The diagonal entries of the matrix $D$ may have the same value. The non-diagonal entries of the matrix $D$ may have values which are shifted one-by-one for each column. In an example, matrix $D$ is provided by formula (17) (see below). In general terms, the information 32 associated to the first sequence may be expressed as the matrix $D$, generated by a linear transformation block 13. The matrix $D$ may include values taken by the transmit signal 24. Entries of the matrix $D$ may be (or be associated to) values of the first sequence.

The information 33 may be provided in terms of matrix $\phi$ and/or may be generated by a linear transformation block 14. The matrix $\phi$ may be a real matrix and may be an $M \times N$, with $M$ rows and $N$ columns. In the example of Fig. 4, $\phi$ may have five rows (by virtue of $M = 5$) and 15 columns (by virtue of $N = 15$). An example of matrix $\phi$ is provided

by formula (18). As may be seen, matrix $\phi$ may include values of the second sequence 25. The matrix $\phi$ may be a circulant matrix. Entries of the matrix $\phi$ may be (or be associated to) values of the second sequence 25.

The information 29 regarding the receive signal 23 may be provided as a measurement data vector (sample vector) $b$ with $M$ components. In the example of Fig. 2, the vector $b$ may be a 5x1 vector, by virtue of $M = 5$. The vector b (29) may be understood as expressing a sequence of the digital output words 28 as output by the AIC 200 and/or include, for each of its components, a value output by the ADC 11.

It has been understood that the product of the first and second matrixes D and $\phi$ may be understood as forming a linear behavioural model matrix, whose columns are such that any subset of up to K columns is linearly independent (K being a number of unknown values of the impulse response to be determined).

In general terms, the following relationship may be valid:

$$b = \Phi \cdot D \cdot H$$

(see also formulas (10), (12), and (19) below).

Matrix H may be understood as associated to the impulse response to be obtained. Matrix $H$ may be a complex matrix with $N$ rows and $N$ columns. Matrix $H$ may be a circulant matrix.

It has been understood that, in order to obtain the estimate 30 of the impulse response, it is possible to use knowledge of the behavioural model matrix, by minimizing a sparsity-promoting function g, where g is a function that maps its argument to a scalar number which represents the degree of sparsity, under the condition that a product of the linear behavioural model matrix $\phi \cdot D$ and the reconstructed impulse response vector 30 approximates or equals the sample vector (12, b). See for example formula (19) below.

In one example, the sparsity-promoting function may be a norm (e.g. a p-norm) or a quasi-norm. E.g. the sparsity-promoting function $g(u)$ may be $g(u) = \|u\|_p$. In general terms, a p-norm may be indicated with $(\text{SUM}|x_n|^p)^{1/p}$ for p>=1 (where "SUM" indicates the summation). Other norms or other sparsity-promoting functions may be used. For 0<p<1, instead of a norm, a quasi-norm may be used as sparsity-promoting function, e.g. a 0-norm: in this case, the 0-norm of a vector may indicate the number of components of the vector which are different from 0 (e.g., if ten components of a vector are different from zero, the 0-norm will be 10; if if five components of the vector are different from zero, the 0-norm will be 5; and so on). Note that the smaller p, the more strong the sparsity-promoting. p=1 may be used to simplifying the processing; p=0 may be preferable in terms of sparsity, despite its processing would be less easy.

The impulse response may be reconstructed by minimizing the norm of the impulse response vector under the condition that a product of the linear behavioural model matrix $\phi \cdot D$ and the channel impulse response matrix $H$ approximately equals the sample vector $b$.

It has been understood that, by defining particular first and second sequences with particular relationships to each other (which also covers the matrixes $D$ and $\phi$) to have analogous similarities and which imply some particular relationships with the vector $b$. The particular relationships between the first and second sequences, by virtue of the fixed definition of the matrixes D and $\phi$, can therefore be described with reference to the relationships between the matrixes $D$ and $\phi$.

It may be possible to define the first and second sequences so that the matrixes $D$ and $\phi$ have the so-called restricted isometric property. This property characterizes matrixes which are nearly orthonormal.

The first and second sequences may be defined so that the product $\phi \cdot D$ (behavioural matrix) of the first matrix [13, D] and the second matrix [14, $\phi$] has columns such that any subset of up to K columns is linearly independent, wherein K is a number of unknown values of the impulse response to be determined.

The first and second sequences may be chosen such that each sample (word 28) obtained by the ADC 11 is generated from a unique linear combination of signal values within an observation frame (e.g. comprising the samples that are used for a joint determination of a channel information associated with a given instance of time).

The first and second sequences may be defined so that the product of the first matrix [13, D] and the second matrix [14, $\phi$] has columns such any subset of K columns is linearly independent, wherein K is a number of unknown values of the impulse response to be determined. (In general terms, it may be understood that the condition is in the product of the matrixes $D$ and $\phi$, and not in $D$ and $\phi$ taken singularly. If the has linearly independent columns, we may perform the reconstruction uniquely, without necessity to enforce other constraints on $D$ and $\phi$ separately.

Therefore, the matrixes $D$ and $\phi$ (or more in general, information 32 and 33) may be directly obtained as a consequence of parameters such as the sequence 1 definition parameter 16 and the sequence 2 definition parameter 18. The parameters 16 and 18 may be defined by the parameter control block 1 on the basis of the necessities (e.g., as requested by the input 102 and/or by feedback and/or by high-level applications, such as a radar application. To the contrary, the information 29 (formed by multiple measurements or words 28) is not predetermined, but is obtained on-the-fly on the basis of the digital output words 28 as output by the AIC 200, and may be understood as mirroring information associated to the receive signal 24. The sample rate $f_s$ may be selected on the basis of parameter 17, while the frame clock rate $f_{IRF}$ may be selected on the basis of parameter $M$. The selection may be obtained through the input 102, feedback 30 or 31, and/or higher level applications (such as radar applications), e.g. in the automated logic.

Accordingly, it may be understood that the parameters 17, 19, 18 and 20 may be selected and varied according to the different necessities. With particular reference to the parameters 17 and 19 ($S$, $M$) it may be simply necessary to observe the relationship $M \cdot S = N \cdot P$. The first and sequences may be defined by parameters 16 and 18 by keeping into consideration the constraints such as those above and below (i.e., the restricted isometric property and so on.

An example may be, for example, for a radar application, associated to the limitations due to Doppler frequencies for a moving object. The Doppler shift is defined by $\alpha = f \cdot \frac{v}{c}$, where $v$ is the velocity of a moving object and c is the speed of light. The Doppler range may be defined as $\pm \frac{1}{2 \cdot T_{IRF}}$. Accordingly, the apparatus 100 (or the automated logic) may comprise or operate as a Doppler controller which selects, based on a desired doppler resolution, at least one of

the sample rate [$f_s$] of the ADC (11), the chip rate [$f_c$] of the first and/or second sequence (25), a ratio [$S$] between the rate [$f_c$] of the first and/or second sequence (25) and the sample rate [$f_s$] of the ADC (11); and
the minimum periodicity of the first sequence and the minimum periodicity of the second sequence (25).

Accordingly, on the basis of the speed of the moving object, there will be the possibility of modifying at least the parameters M and S to reach the requested $T_{IRF}$. For example, it is possible to adjust the parameter $M$ (19) to

- increase the IRF rate (to reduce the $T_{IRF}$) if the impulse response of the linear system 4 shows low signal diversity or
- decrease the IRF rate to gain either signal-to-noise ratio, SNR, for system responses featuring high signal diversity.

In addition or alternative, the parameter controller 1 and/or the automated logic may operate so as to define at least one of the parameters 16, 17, 18, 19 on the basis of the ambiguity range or the number of non-zero components in the system's impulse response (30).

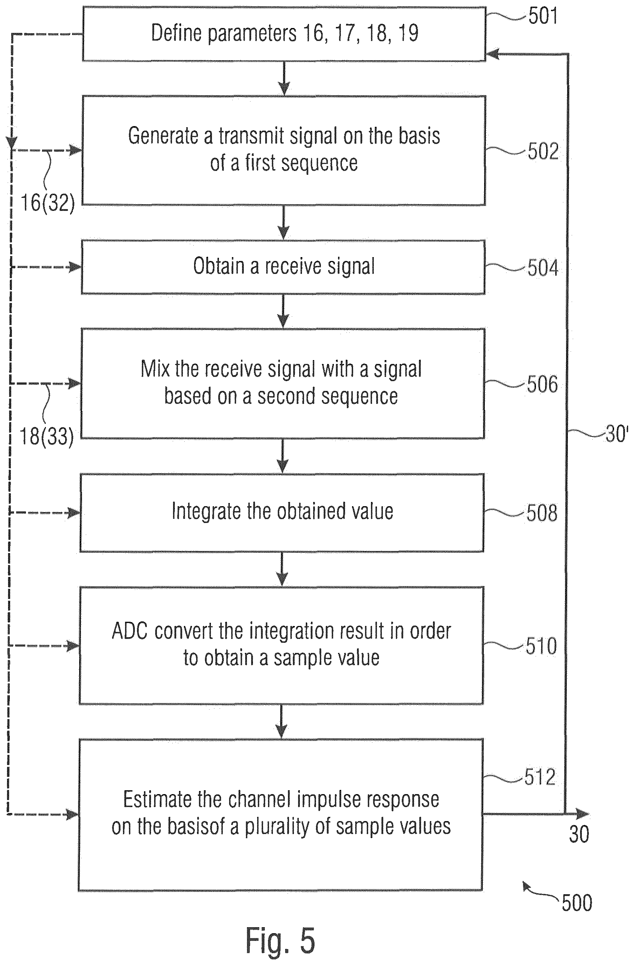

Fig. 5 shows a method 500 which may be understood as implementing and also summarizing and/or embodying the apparatus 100 above. The method 500 may include a step 502 of generating a transmit signal (e.g., 23) on the basis of a first sequence. The first sequence may be defined by parameter 16 and/or by the sequence generator 1 block 7. The transmit signal may be the signal 23 and may have a period $T_x$ which is a multiple of a chip rate $T_c$ (where $T_x = N \cdot T_c$, which $N$ natural number which is the number of chips in a period $T_x$ of the first sequence).

The method 500 may comprise a step 504 of obtaining a receive signal. The receive signal may be, for example, the signal 24. The receive signal 24 may be the reflected version of the signal 23, for example. The receive signal 24 may permit to reconstruct information on the channel (e.g., impulse response).

The method 500 may comprise a step 506 of mixing the receive signal 24 with another signal 25 based on the second sequence, to obtain a mixed signal 26. This may be obtained, for example, at mixer block 9 by multiplying the signal 24 with the signal 25 which may be understood as being the second sequence. The signal 25 may be generated by the sequence generator 2 block 8, e.g., on the basis of the sequence 2 definition parameter 18. The signal 25 may be a deterministic signal. The signal 25 may have a periodicity different from the periodicity of the transmit signal 23. The signal 25 may have a periodicity which is a multiple of the chip period $T_c$. The signal 25 may be synchronized to the system rate $f_c$ (where $f_c = 1/T_c$). The signal 25 may be reset on the basis of the reset command 22 at with a frequency $f_{IRF}$ (where $F_{IRF} = f_c/(S \cdot M)$).

At step 508 the mixed signal 26 may be integrated (e.g., at the analog integrator block 10). The integration may be reset with frequency $f_s$ (where $f_s = f_c/S$).

At step 510, the method 500 may ADC convert (e.g., through the ADC 11) the integration result to obtain a sample value. Sample values are obtained according to the sample rate $f_s$ (where $f_s = f_c/S$). Every $M$ obtained digital samples, a digital output word 28 (formed by $M$ consecutive digital samples) may be obtained.

At step 512, the channel impulse response (e.g., 30) may be estimated on the basis of information 29 regarding the digital output words obtained at step 510, as well as on the basis of information 32, 33 associated to the first and second sequences. Therefore, at step 512, it is possible to estimate the impulse response 30.

In Fig. 5 there is also shown a step 501 in which parameters such as at least one of the parameters 16, 17, 18, 19 may be defined, e.g., through input 102, e.g., by a user, e.g., by feedback 30 or 31, e.g., by an application (such as a radar application), e.g. by the automated logic. The feedback line 30' shows the possibility of defining at least one of the parameters 16, 17, 18, 19 on the basis of the estimated channel impulse response. This may be obtained, for example, in applications such as those associated to the Doppler range and/or the modification of the IRF rate based on the diversity of the impulse response. The feedback line 30' of Fig. 5 may therefore be associated to the feedback line 30' of Fig. 1.

One particular case of the method 500 may be the following:

1) Generating (e.g., sequence generator 1 block 7) a transmit sequence and use it to excite the linear system (e.g., 4) under test.

2) Generating a second sequence (e.g., by sequence 2 generator 8), which is multiplied with the collected analog signal.

3) Collecting the receive signal 24 and multiply in analog domain by the second sequence 25, to obtain the signal 26.

4) Performing subsequent integrations, at integrator block 10, of adjacent windows of the signal 26.

5) Digitizing by the ADC 11 the output of the integrations 27.

6) Determining the effective measurement kernel used from the sequences chosen, the integration parameters and the relative timing of the involved steps

7) Reconstructing (e.g., by reconstruction block 15) the desired impulse response 30 from the digital data obtained in step 4 with the knowledge of the measurement kernel e.g., by means of sparse signal reconstruction.

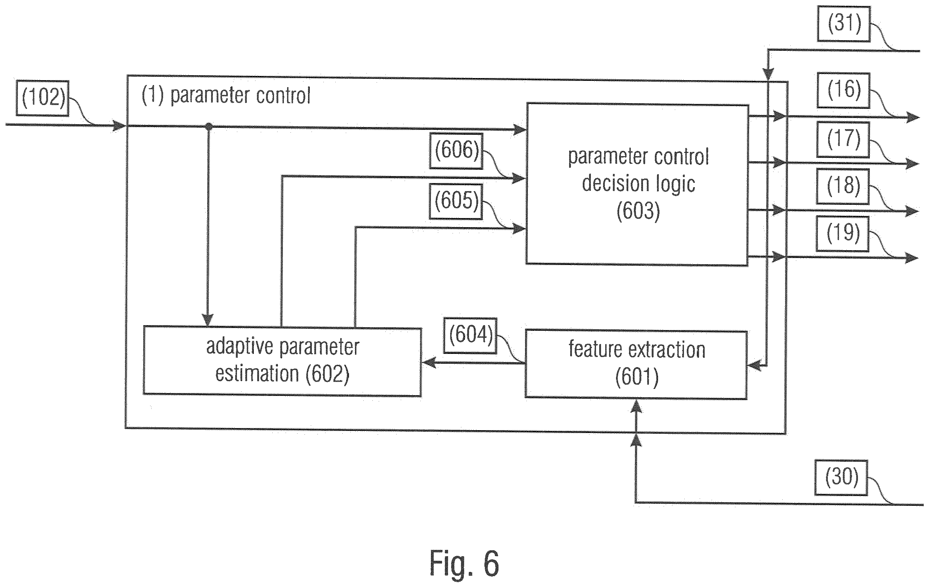

Fig. 6 shows an exemplary implementation of the parameter estimation block (1) such that the apparatus (100) may modify the parameters (16), (17), (18) and (19) adaptively, based on either previous estimates of the impulse response (30) and/or based on information about the linear system from other sources (31). In a feature extraction step (601) relevant features of the linear system are extracted. These can be the speed of individual subtargets, an estimate of the impulse response's sparsity order or its ambiguity range (width of the impulse response in delay domain) just to name a few. This process strongly depends on the actual properties of the measurement scenario the apparatus (100) is applied to.

The extracted key features are then processed in an adaptive parameter estimation step (602) to obtain the actual targeted parameters for Doppler range (605) and compression factor (606), all controlled by user input (102) specifying the behaviour of the adaptive control process.

Finally, a Parameter Control Decision Logic (603) interprets the Doppler range target (605) and compression factor target (606) parameters to set the actual parameters (16), (17), (18) and (19) for the apparatus (100), based on user constraints (102) that may set boundaries corresponding to hardware limitations of the frontend (such as maximum ADC rate).

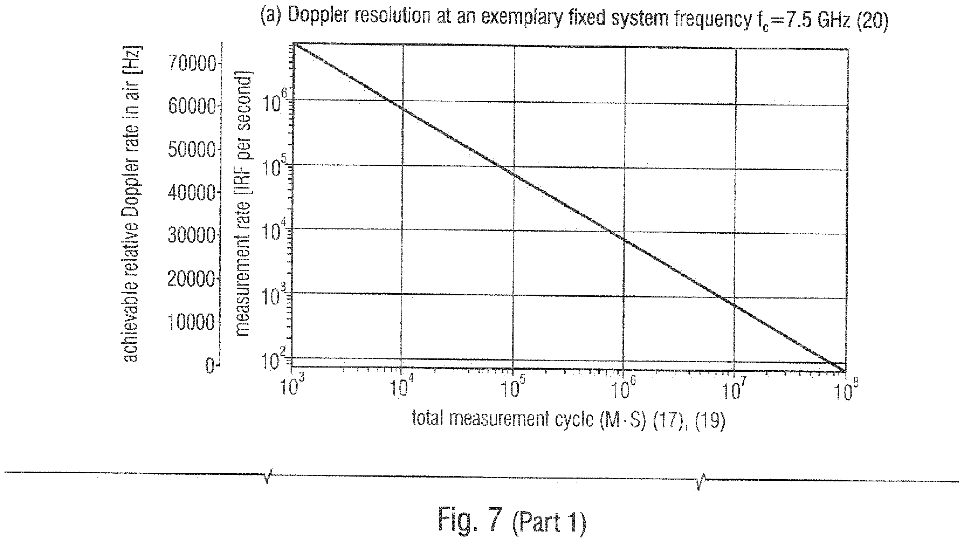

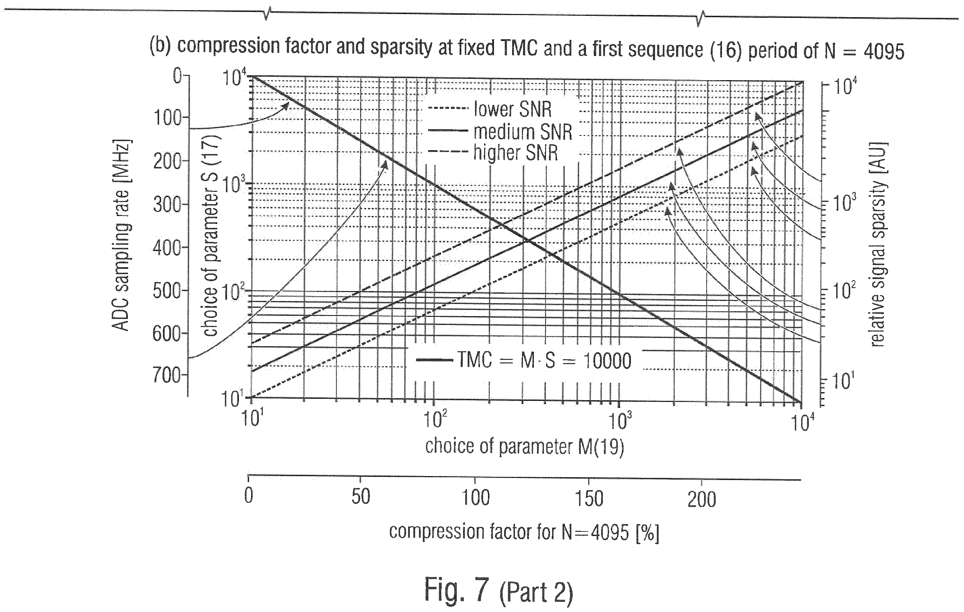

Fig. 7 details how the parameters Doppler range target (605) and Compression factor (606) can be connected to the parameters S (17), M (19) and sequence 1 (16) period of apparatus (100). A crucial factor is the Total Measurement Cycle (TMC), which can be generated by the multiplication of S (17) and M (19). It directly relates to the observation duration required in order to estimate one impulse response of the linear system (4) and is therefore directly related to the Doppler range. The choice on how to split the desired TMC to S (17) and M (19) is influenced by available SNR, signal sparsity and/or ADC capabilities, amongst others. The plots for variations of SNR must not be interpreted quantitively as the exact dependency on SNR cannot be defined generally. However it can very well be said that higher SNR leads to relaxations on signal sparsity, compression factor or achievable Doppler range in the context of the apparatus (100).

Example: If a system aims to configure for a certain minimum Doppler range (605), its TMC and thus the parameters (17) and (19) must be chosen accordingly. However, depending on the available SNR (indicated by the three lines in the second drawing of Fig. 7) and Sparsity requirements, this might require a larger number of observations, controlled by parameter M (19). This then might increase the necessary ADC sampling rate (21) as parameter S (17) will need to be chosen sufficiently low to achieve the target TMC.

A. System model and channel reconstruction

The observed response signal is observed by mixing the output (24) of the system (4) with a second signal sequence (25), and finally digitizing the result (27) of an integrate-and-dump operation on the mixing operation output (26) at a specific sampling rate $f_s$ over a total number of $M \in \mathbb{N}$ samples, hereafter referred to as one frame. A main characteristic of the proposed architecture is that the first signal sequence and the second signal sequence (25) are generated by a common uniform clock signal $f_c$ and are synchronized at the beginning of every frame, effectively defining an operation which is deterministic and periodic. The frame period $T_{IRF}$ and/or the sampling period $T_s$ is an integer multiple of a common time interval $T_c$. The proposed architecture allows to measure the impulse response of a linear system (4) at a rate $f_c$ that is much lower than the bandwidth of the to-be-observed linear system (4) itself as well as of each of the signal sequences. Obtaining the actual impulse response may imply a post-processing step (e.g., at block 3) that reconstructs an approximation 30 of the linear system's impulse response based on one measured data frame. This is possible, as the signal transformation which this proposed architecture applies is deterministic and known. In a preferred example, both signal sequences are composed of a sequence of narrow rectangular NRZ-pulses ("chips") with relative amplitudes [+ 1; -1] and uniform width $T_c$ (other implementations are possible The chip rate may be $f_c$, where $f_c = 1/T_c$ (in this document, in some cases, instead of $f_c$ there may be the notation $f_0$). In this case, the sampling rate can be chosen as an integer fraction of the chip rate such that $f_s = f_c/S$. Let the first sequence comprise N chips (each with length $T_c$) and let a complete measurement cycle comprise $P$ periods (each with length $T_x = P \cdot T_c$) of the first sequence. Then one cycle, producing one frame of data, is completed after $N \cdot P$ chips which leads to M observations where $M = N \cdot P/S$. The proposed architecture may allow to reconstruct the impulse response of the linear system from M observations of one measurement cycle (each measurement cycle taking a sample period $T_S$), based on a specific reconstruction stage that may depend on a parametric model and whose examples are described below and above. A complete measurement cycle may therefore take a time of $T_{IRF} = M \cdot S \cdot T_c = N \cdot P \cdot T_c$. This means that one impulse response is available at a rate of $f_{IRF} = 1/ T_{IRF}$ (in some cases, additional averaging may be considered, which may further reduce that rate).

The tracking of time-varying impulse responses may therefore be limited, in examples, to Doppler frequencies within $\pm 1/2/T_{IRF}$. Now, since the parameters N, P, and S, are adjustable (e.g., defined an automated logic), the proposed architecture offers the flexibility to trade the Doppler resolution with the sampling clock $f_s$. We can choose a lower sampling clock $f_s$, e.g., by increasing the parameter S, which leads to an increase of $T_{IRF}$ and thus a lower Doppler range. This is a novel and inventive feature compared to the prior art approach from [1], [2], [3], which also discloses an architecture for measuring the impulse response of a linear system. It uses a similar transmit sequence but it does not use a second receive sequence and therefore does not allow to adjust the sampling rate Doppler trade-off in the way it was mentioned above. Further, the track-and-hold block of [1], [2], [3] is replaced with a serial combination of the newly introduced blocks for mixing the input signal with the second sequence, followed by performing an integrate-and-dump operation in that order. When comparing both approaches the temporal receive signal coverage ratio may be considered. This is the proportion of the actual active signal observation time that gets represented in one observation to the repetitive observation interval $T_S = T_c \cdot S$. While the proposed extension allows observing the signal continuously at a ratio of 1, the snapshotting approach embodied by the track-and-hold architecture only achieves a ratio of $T_c/T_s = 1/S$.

The additional blocks, namely the second sequence generator (8), mixer (9) and integrate-and-dump filter (10), introduced by the present proposal, may be recognized as analog-to-information converter (AIC) (200) in the form of a random demodulator (RD) (see also [6]). The AIC 200 may be understood as a building block for performing the compressive acquisition of (wideband) signals with low-rate ADC. The term "compressive" reflects the reduction of the observation rate below what is commonly required to fulfil the Nyquist sampling criteria for the receive signal. Further, due to the introduced mixing operation (9) of the receive signal (24) with the second sequence (25) followed by the integrate-and-dump filter (10), our proposed technique is capable of representing the all of the receiving signal's energy in the observations generated, in contrast to the sub-sampling approach of [1], [2], [3].

A time-varying impulse response $h(\tau, t)$ of a linear system at time t can in general be expressed as

$$h(\tau,t) = \sum_{\ell=1}^{L} \alpha_\ell(t) \cdot \delta\left(\tau - \tau_\ell(t)\right), \tag{1}$$

i.e., it is comprised of a sequence of L paths (taps) with complex tap weight $\alpha_\ell$ and delay $\tau_\ell$, This impulse response can, e.g., stem from reflections of the signal across different propagation paths with different path lengths. Note that both, amplitude and delay can be time-varying. However, it has been understood that it is possible to assume that they vary slowly in time so that within one measurement cycle $T_{IRF}$ they can be considered approximately constant but changing from cycle to cycle. Their rate of change may be referred to as the Doppler frequency. For example, if a relative movement between transmitter/reflecting object/receiver occurs at a certain speed $v$, this gives rise to a frequency-proportional Doppler shift given by $\alpha = f \cdot v/c$, where c is the speed of light. Since we obtain one estimate of the impulse response every $T_{IRF}$, we can resolve a Doppler range of $\pm \frac{1}{2 \cdot T_{IRF}}$ (according to the Nyquist criterion). This shows that there is maximum allowed speed of movement is inversely proportional to $T_{IRF}$. After transmitting the periodic sequence x(t), the receive signal can be written as

$$y(t) = \sum_{\ell=1}^{L} \alpha_\ell \cdot x(t - \tau_\ell) + w(t) \tag{2}$$

where w(t) represents the additive noise and $\alpha_\ell$, $\tau_\ell$ represent tap weights and delays of the current channel realization. As formula (2) shows, besides for the additive noise, y(t) is given by a linear combination of shifted copies of the known sequence x(t). This implies that the a signal can be represented via only 2 . L unknowns, which suggests that a sampling at a rate above $2 \cdot L/T_{IRF}$ is possible without loss of information (e.g., in the noise-free case), regardless of the bandwidth of the signal sequences.

B. Block descriptions

In the following please find a detailed description of building blocks, some property of which (in relationships to examples) are also discussed above.

**1) Parameter control block**

A control unit which may provide the measurement parameters required in the blocks (2) and (3) as shown in figure 1. This block (1) may exploit known state information (31) of the system under test (4) or the reconstruction output of previous observation periods (30) e.g., by means of an adaptive strategy.

**2) Measurement block**

The measurement block (2) may be responsible for probing the system under test (4) with a suitable periodic excitation stimulus and to acquire observations in the form of digital data samples according to at least one of the parameters 17, 19, 16, 18 and 20, e.g., provided by the parameter control block (1). A novelty of the proposed method lies in this block (22) and the strategy the measurement of the unknown impulse response of the linear system (4) under test may be retrieved by the processing unit block (3). Our proposed method enhances prior art methods by replacing the undersampling a-to-digital conversion, as proposed by [1], [2], [3], with a random demodulator, as proposed by [5], [4]. This is a sampling strategy that applies the theoretical framework of compressed sensing to conduct a series of observations (28), and involves additional post-processing (3), e.g., to retrieve a measurement of the linear system impulse response from the observations taken. A range of algebraic requirements that may depend on the measurement system's signal model may be fulfilled in order to give recovery. In a prominent application of the random demodulator the receive signal (24) may be first multiplied (and/or mixed) with a known deterministic signal (25), that is generated by a suitable signal generator (8). The resulting signal (26) may be then fed into a continuous time-gated integrator (10). The gate width of the integrator block may be controlled by a suitable timing generator (5). In a preferred example the integrator block (10) would be designed such that it is capable of fully-continuous operation by means of multiple integration stages that are switched properly. This may be achieved most easily by operating two integration stages that are antagonistic controlled by one time-gate control signal. While one of the integrators is busy integrating, the other holds the value for a sufficient period to allow a successful a-to-digital conversion and then discharges its output. On every logic transition of the time-gate control signal, the integrators switch their operation modes, effectively enabling the a-to-digital converter to observe the energy of consecutive time-slices of the mixed signal (26). The blocks' functionality can be approximated by a linear model as given in (23), (24), (25) and (26).

3) Processing Unit

The reconstruction block (3) may compose a measurement vector (or sample vector) 29 from the observations of one measurement frame (28), (22) and construct the linear system model (32), (33), e.g., from the parameter set formed by at least one of the parameters 16, 17, 18, 19. Based on those prerequisites the linear system's impulse response (30) may be approximated by the block 15. A basic principle of determining the impulse response of a linear system is in general to excite it with an ideal impulse and measure its response

$$e = \begin{cases} N & \text{for } n = 0 \\ -1 & \text{else} \end{cases} \qquad (3)$$

$$\widetilde{h} = e \cdot h \qquad (4)$$

where $e \in \mathbb{R}^N$ is the ideal impulse vector.

The periodic convolution can be expressed as a matrix multiplication with a circulant matrix $H \in \mathbb{C}^{N \times N}$ which may be (in examples) defined as:

$$H = \begin{bmatrix} h[0] & h[N-1] & \cdots & h[1] \\ h[1] & h[0] & \ddots & \vdots \\ \vdots & \vdots & \ddots & \vdots \\ h[N-1] & h[N-2] & \cdots & h[0] \end{bmatrix} \tag{5}$$

$$\tilde{h} = H \cdot e \tag{6}$$

As this straightforward approach becomes impractical very quickly due to implementation considerations, these may apply a pulse compression by convolving the ideal pulse with a vector having special auto-correlation properties, The true impulse response $h$ can then be retrieved from the measurement vector $\hat{b}$ using the inverse matrix $D^{-1}$, which is unfortunately quite expensive to determine. In this case, the special auto-correlation property of the transmit sequence is exploited (7). Then, $D^{-1}$ can be sufficiently approximated by $D^H$, where "H" refers to the hermitian matrix, i.e., the conjugated transpose of matrix D yielding a relatively small error $\Delta r = D^H \cdot D$. Extending the system model to:

$$\hat{e} = D \cdot e \tag{7}$$

$$\hat{b} = H \cdot \hat{e} \tag{8}$$

$$\hat{\tilde{h}} = D^H \cdot \hat{b} + \Delta r. \tag{9}$$

It has been understood that adding the proposed sampling scheme extends the model further:

$$b = \Phi \cdot H \cdot D \cdot e \tag{10}$$

We see that the order of operands prohibits the direct attempt of retrieving a linear system model. To overcome this issue, we consider the property of Fourier matrices to diagonalize circulant matrices

$$H = F^H \cdot X \cdot F \tag{11}$$

where $F \in \mathbb{C}^{N \times N}$ is the discrete Fourier matrix of order $N$ and $X$ a diagonal matrix $\in \mathbb{C}^{N \times N}$. A product of any two circulant matrices yields

$$H_1 \cdot H_2 \;=\; F^H \cdot X_1 \cdot F \cdot F^H \cdot X_2 \cdot F$$
$$=\; F^H \cdot X_1 \cdot X_2 \cdot F$$
$$=\; F^H \cdot X_2 \cdot X_1 \cdot F = H_2 \cdot H_1$$

where $X_1$ and $X_2$ each are diagonal matrices $\in \mathbb{C}^{N \times N}$. We see that we can swap the terms for matrix products of circulant matrices.

Exploiting this property yields a final linear model for this proposed method

$$b = \phi \cdot D \cdot H \cdot e \qquad\qquad (12)$$

of which $\tilde{h}$ can be determined according to the block (15) (Fig. 3). $b$ may indicate the sample vector 29.

4) Linear System (4) under test

Examples here may be directed to measure a wideband linear time-invariant system (LTI) system. Proposed examples may permit to retrieve its impulse response $h(\tau)$. Contrary to the prior art methods in [1], [2], [3] is that the impulse response can be assumed to be sparse, i.e. the impulse response can be modeled as a set of weighted and time-shifted delta functions of its $K$ primary components:

$$h(\tau) = \sum_{k=0}^{K-1} \delta_k(\tau - \tau_k)$$

$$(13)$$

In a prominent application $h(\tau)$ models the power delay profile of a radio-frequency (RF) channel containing information about its $K$ dominant multi-path propagation components. In a discrete interpretation, $K$ may be the number of non-zero or above-noise-floor components of the impulse response vector $h \in \mathbb{C}^N$. $K$ may be referred to as sparsity of the channel.

5) Clock Divider block (5), division by a divider factor S

This block 5 may derive the sampling clock (21, $f_s$) from the system clock (20, $f_c$) and may be controlled by the parameter S (17). The choice of S does not need to be fixed in time and may very well be time-variant, e.g. if non-equidistant observations (27) are required. However, in a preferred example this block 5 may be implemented as an integer divide-by-S clock divider with S > 1, leading to a uniform sampling clock $f_s$, at which, for example the ADC (11) obtains the digital words (28).

6) Clock Divider block, division by M

This block 6 may generate the measurement frame synchronization signal (22, $f_{IRF}$) from the sample clock (21, $f_s$) and may be controlled by the parameter M (19). The choice of M does not need to be fixed in time and may very well be time-variant, e.g. if measurements of varying observation rate or with a varying overall number of observations (27) are required.

In prior art methods a strict frame synchronization is not required and a measurement always consists of $N$ observations, which would resemble the number of system clock cycles (20) in one transmit sequence period (23). As in the present proposed examples, the number of observations (words 28) for each frame (and for each measurement vector 28 or b) can be adjusted. Accordingly, the parameter $M$ offers a new degree of freedom in that it allows a trade-off between signal sparsity, signal SNR and measurement rate (with the known effects to Doppler sensitivity).

In a preferred example, this block 6 may be implemented as an integer divide-by-M clock divider with $M > 1$, fed by the sample clock $f_s$ (21), leading to a uniform overall measurement rate $f_{IRF} = \dfrac{f_c}{S \cdot M}$, consisting of $M$ observations (words 28) obtained by the ADC (11) at sampling rate $f_s$.

7) Generator block for sequence 1 ("sequence generator 1 block")

This block 7 may generate a periodic a signal (23) with a signal period $T_x = \dfrac{N}{f_c}$ synchronous to the system clock, where $N \in \mathbb{N}$ is the number of system clock cycles per period and $f_c$ is the system clock frequency (20). The signal waveform may be understood as being completely defined by the transmit signal definition parameter (16). In a preferred example, the sequence generator may be implemented as a binary linear feedback shift register (LFSR) properly configured in register size and feedback tap configuration to generate a MLBS. The parameter defining the transmit signal generator's operation may then comprise, e.g., consist of the register's feed-back tap configuration $t = \{0,1\}^K$, with the transmit signal sequence's characteristic polynomial of order $K$ being $g(x) = \sum_{i=0}^{K} t_i \cdot x^i$, and the register's initial value being $s_{\{0...K\}} = \{0,1\}$, mapping to the generator's output symbols as $\{0 \rightarrow 1, 1 \rightarrow -1\}$. In such a system, the feedback tap configuration, and thus the characteristic polynomial shall be chosen such that the polynomial $g(x)$ is irreducible [7]. Then, the length $N = 2^K-1$ of the periodic sequence is maximal given the order $K$ and its period in time domain is $T_x = N \cdot f_c$. The advantage of choosing a periodic maximum length sequence lies in the properties of its cyclic auto-correlation function. For an ideally band-limited linear system of corner frequency $B = \dfrac{f_c}{2}$, it can be written in continuous and discrete form:

$$\Psi_{xx}(\tau) = 2^K \cdot \frac{\sin(\pi f_0 \tau)}{\pi f_0 \tau} - 1$$

$$(14)$$

$$\Psi_{xx}[n] = \left\{ \begin{array}{ll} N & \text{for } n = 0 \\ -1 & \text{else} \end{array} \right\}$$

$$(15)$$

It can be seen that for the given choices, the delay-domain resolution of the impulse response is limited to the peak-width of the auto-correlation function $\Psi_{xx}$, which is $\Delta\phi \approx \dfrac{1}{B} = \dfrac{2}{f_c}$. Given the propagation speed in the medium, this directly relates to the achievable resolution (in the sense of target separation) of $\delta = \dfrac{v_0}{\Delta\phi}$. The accuracy (in the sense of ranging) can even be well below that.

8) Generator (8) block for sequence 2 (25) ("sequence 2 generator block 25")

This block 25 may generate a deterministic signal (25, mixing signal) whose temporal relation to the system clock (20) is known at all times. The properties and waveform of the deterministic signal can be controlled by a parameter (18) introduced in this method, which is not present in any prior art method. This block 8 may relate to the mixing sequence generator of a random demodulator as in [5]. In a preferred example the deterministic signal (25) is generated by a pseudo-random sequence generator (8), which may be fed by the system clock (20) and/or may be producing a uniform sequence of symbols at a rate $f_c$, that may be drawn from the Rademacher set [-1; 1], for example (other techniques may be implemented).

Although generator 8 is quite similar to the signal 1 generator block (transmit signal generator) 7, block 8 does not necessarily require to generate a periodic sequence. In order to ensure that the deterministic mixing signal (25) is known at all times, the pseudo-random sequence generator (8) may be reset by the frame synchronization signal (22), as shown by the dashed array labeled reset. The deterministic mixing signal (25) generated by this block does not necessarily need to be periodic as long its state is known at all times.

9) Signal mixing block

This block 9 may combine the receive signal $y(t)$ (24) and the mixing signal $q_y(t)$ (25) by means of point-wise multiplication of the signals:

$$y_m(t) = q_y(t) \cdot y(t)$$

$$(16)$$

Due to the choice of symbols possible signal values the mixing operation (9) may be implemented by a simple polarity inverter, which inverts the sign of the analog receive signal (24) whenever the Rademacher deterministic signal (25) is [-1] This block relates to the mixer block in [4]. In a preferred example, a common RF two-port signal mixing circuit, e.g. a Gilbert cell, is chosen for implementation of this block.

10) Integrator block

This block 10 may be understood as being similar to the mixer block in [4]. In the preferred example a short-time integrator with controllable integration slope is chosen to implement this block. This allows stretching the impulse response function of the integrator block, allowing to control the integration time optimally when adaptively varying the parameter 19.

11) Analog-to-Digital Conversion block

This block 11 may convert the continuous analog integrated signal (27), e.g. as output by the integrator block (10), into a sequence of digital output words (28) by means of a common ADC. In a prominent application the number $M$ of observations (words 28) is chosen smaller than the length $N$ of the transmit sequence (which also is the size of the reconstructed impulse response vector $h[n]$ (30)), hence the term "compressed". This directly leads to one of the following implications:

(1) The AIC 200 could run at reduced sampling rate $f_s$,
(2) While retaining the sampling rate $f_s$, more reconstructions of the impulse response could be generated.

12) Data vectorization block

The data vectorization block 12 may collect the stream of observations (words 28) in the measurement sample sequence and form observation vectors b (29) that fit the linear transformations (33) generated by formula (14). As the underlying parameters 17 and 19 may be time-variant, the dimension of the resulting observation vector b (29) may change accordingly but fits the shape of the corresponding element in the matrix 33 at any time.

13) Linear transformation block for signal base

The linear transformation block 13 may define a basis spanned by time-shifted versions of the excitation signal.

Due to the special auto-correlation properties of the transmit sequence (23) any set of two different base vectors (time-shifted versions of the excitation signal) exhibits low correlation. Therefore, the columns of the resulting basis may be regarded as quasi-orthogonal and the sparsity assumption of the linear system's impulse response (4) is also valid for the receive signal (24) in this signal basis, although the receive (transmit) signal is dense and exhibits no resemblance of sparsity. As we have introduced earlier, the requirement of sparsity in a known signal domain for successful sparse recovery is therefore fulfilled.

$$D = \begin{bmatrix} x[0] & x[N-1] & \dots & x[1] \\ x[1] & x[0] & \ddots & \vdots \\ \vdots & \vdots & \ddots & \vdots \\ x[N-1] & x[N-2] & \dots & x[0] \end{bmatrix}$$

(17)

Matrix D may be a circulant matrix of the transmit signal 23 and/or resemble a periodic convolution matrix.

14) Linear transformation block for sampling operation

This block describes the linear analog signal processing operation as implemented in the measurement block (2), i.e. by the blocks (8), (9), (5), (10) and (6), as a linear transformation $\Phi \in \mathbb{R}^{M \times N}$, which can be exemplary defined as follows for the preferred example:

$$\Phi_{i \bmod N, \lfloor \frac{i}{S} \rfloor} = q_y[i]$$

for i=0…(S·M)     (18)

Where *"mod"* indicates the remainder of the integer division, and " $\lfloor \frac{i}{S} \rfloor$ " indicates the floor function (i.e., the integer part of the argument).

See the description of the data vectorization block b (12) for details on the relation of the outputs of this block and (the passages describing the measurement data vector b (29) and the measurement matrix (33) respectively.

15) Reconstruction block

This block 15 may reconstruct the linear system's impulse response (4, 30) by solving the following optimization problem based on knowledge of the exact measurement operation in block 2:

$$\operatorname*{argmin}_{\tilde{h}} \quad \|\tilde{h}\|_0$$
$$\text{s.t.} \quad \Phi D \tilde{h} = b$$

(19)

where "argmin" refers to the value of $\tilde{h}$ which minimizes the function $\|\tilde{h}\|_0$ and $\|...\|_0$ is the so-called 0-norm (quasi-norm). In alternative, another quasi-norm or a proper norm may be used (e.g. a p-norm $\|...\|_p$ with p>=1). More in general, the equation (19) may be used by minimizing a sparsity-promoting function g, where g is a function that maps its argument to a scalar number which represents the degree of sparsity, under the condition that a product of the linear behavioural model matrix $\phi \cdot D$ and the reconstructed impulse response vector 30 approximates or equals the sample vector (12, b). An example may be to use the sum of the absolute value of the components of the vector (in some other example, other kinds of norms may be defined). Another example may be to use the 0-norm $\|...\|_0$, i.e. the quasi-norm that provides the number of components of a vector which are different from 0.

Due to that $N \neq M$ the system of linear equations (SLE) in formula (19) is either under- or over-determined and require attention. In the literature, many methods capable of solving the described problem have been investigated. Amongst them are orthogonal matching pursuit (OMP), iterative shrinking threshold algorithm (ISTA) or basis pursuit (BP), etc.

C. Parameter descriptions

The exact parameter definition is very dependent on the actual implementation. The following parameters relate to preferred examples.

16) Sequence 1 definition properties

See the description of the generator block 7 for the sequence 1 for a description of the defining parameters and the description of the transmit signal 23 for a description of the sequence 1 (transmit signal x(t)).

17) Sample clock (divider factor) 17, S

See the description of the clock divider block 5 for a description of the parameter S.

18) Sequence 2 definition properties

See the description of the generator 8 for the sequence 2 for a description of the second sequence (mixing signal).

19) Frame clock divider factor

See the description of the clock divider block 6 for a description of the parameter M.

D. Signal descriptions

20) System clock (common system clock or chip rate) $f_c$ (signal: 20)

The system clock $f_c$ is the fundamental clock supplying the sequence generators 7 and 8 as well as a clock divider block chain consisting of the blocks 5 and 6. The choice of the fundamental clock frequency $f_c$ may determine the rate of chips being generated at the output of the generator block 7 and thus directly translate to the bandwidth $B$ of the transmit signal (23), which may be understood as corresponding to the achievable resolution.

21) Sampling clock rate $f_s$ (Signal: 21, parameter: S,17)

The sampling clock divider block (5) may be understood as generating the sampling clock $f_s$ (e.g., used by the ADC 11) from dividing the system clock $f_c$ (20) by an integer divider factor $S \in \mathbb{N} > 1,$ so that the resulting sampling clock is synchronous to and slower than the system clock:

$$f_s = \frac{f_c}{S} \tag{20}$$

$$T_s = \frac{1}{f_s} \tag{21}$$

The signal may serve as sampling clock for the signal conversion block or ADC (11) and may further control the time behavior of the integrator block (10). In examples, as short-time integrator the sampling clock may determine integration window $t_s$ and therefore achieve high temporal resolution, i.e., low jitter. In another implementation variant, as low pass filter withhold circuit the clock edges control the exact sampling instances of the low-frequency integrated signal.

22) Frame clock rate $f_{IRF}$ (Signal: 22, Parameter(s): 17 and/or 19)

The frame clock divider block 6 generates the frame clock $F_{IRF}$ by dividing the sampling clock $f_s$ (21) with an integer divider factor $M \in \mathbb{N} > 1.$ $f_{IRF}$ may be understood as being synchronous to, but slower than, both the system clock $f_c$ (20) and the sampling clock $f_s$ (21):

$$f_F = \frac{f_s}{M} = \frac{f_c}{S \cdot M} \tag{22}$$

$$T_{IRF} = M \cdot T_S = \frac{1}{f_{IRF}} = \frac{S \cdot M}{f_c} \tag{23}$$

The frame clock (22) may provide the time structure for the association of single elements of the measured sample sequence (28) to a measurement vector $b$ (29) and trigger the impulse response vector reconstruction in the reconstruction block (15) of the math processing unit (3) from the collected measurement data vector once it was filled. Further, it may control the time-behavior of sequence 2 generator (8) by synchronizing the mixing signal $q_{y(t)}$ (25) to the frame clock $f_{IRF}$ (22), thus ensuring a consistent and stable timing scheme for the integration of all measurement samples ("words" 28) over all measurements, i.e. for each measurement data vector $b$ (29).

23) Transmit signal $x(t)$

The transmit signal $x(t)$ may be the output of the Sequence Generator 1 block (7) and is used as stimulus signal to excite the linear system under test (4):

$$x[n] = q_x[n \bmod N] \tag{24}$$

$$x(t) = x[\lfloor \frac{t}{T_0} \rfloor] \tag{25}$$

(where $T_0$ is $T_C$).

24) Receive signal

The receive signal may be understood as the convolution of the transmit signal (23) and the unknown impulse response of the linear system under test (4) and can be written as:

$$y(t) = x(t) * h(\tau) \tag{26}$$

where * is the linear convolution operator.

25) Mixing signal $q_{y(t)}$ (25)

The mixing signal $q_{y(t)}$ is the output of the Sequence
Sequence generator 2 block (8) and can generate a second sequence 25 (mixing signal) which can be mathematically written (in examples) as

$$m[n] = q_m[n \, mod(M \cdot S)] \tag{27}$$

$$m(t) = m[\lfloor \frac{t}{T_0} \rfloor] \tag{28}$$

(where $T_0$ is $T_c$).
for the preferred example as described in formula (8), including the described generator reset from the signal (22). In order to ensure good conditioning of the measurement matrix (33) the lengths of both generator signals, N for (7) and $S \cdot M$ for (8) respectively must differ. This may permit to ensure that each observation ("word" 28) is generated from a unique linear combination of the receive signal (24) within one observation frame.

26) Mixed signal $y_m(t)$ (26)

The mixed signal (26) is the continuous output signal of the multiplication (or mixing) operation as performed by (9) on the signals (24) and (25):

$$y_m(t) = y(t) \cdot m(t) \tag{29}$$

27) Short-time integrated a signal $\overline{y}_m(b)$

The integrator output signal (27) is the continuous output signal of the analog integration operation of block

$$\overline{y}_m(t) = \int_{T_0 \cdot \lfloor \frac{t - T_0}{T_0} \rfloor}^{T_0 \cdot \lfloor \frac{t}{T_0} \rfloor} y_m(\tau) d\tau \tag{30}$$

(where To is $T_c$).

28) Measurement sample sequence $\overline{y}_m(m)$ (28)

The integrator output signal (28) is a sequence of digital output words that are the representation of the integrator output signal (27) as converted by the ADC (11):

$$\overline{y}_m[n] = \overline{y}_m(n \cdot T_0) \tag{31}$$

(where $T_0$ is $T_c$).

29) Measurement data vector b

A set of observations (or "words" 28) corresponding to one particular measurement frame $b \in \mathbb{C}^M$, whose alignment may be determined by the frame clock signal (22):

$$b = [\bar{y}_m[0] \ldots \bar{y}_m[M-1]]^T$$

(32)

where "T" refers to the transposed matrix.

30) Impulse response vector $\tilde{h}(m)$ (30)

The discrete representation of the approximated linear system's channel impulse response $\tilde{h} \in \mathbb{C}^M$ (4) and output of the measurement reconstruction block (15):

$$\bar{h}[n] = \tilde{h}(n \cdot \Delta\phi)$$

(33)

$$\bar{h} = [\bar{h}[0] \ldots \bar{h}[N-1]]^T$$

(34)

where T refers to the operation of transposition.

31) Channel state information

An optional set of information about the linear system under test (4) that assists the parameter control block (1) in a preferred example.

32) Signal basis transformation D

The signal basis $D \in \mathbb{C}^{N \times N}$ in which the receive signal (24) is sparse. See the description of block 13 for more details.

33) Measurement matrix $\Phi$

See section II-A and the description of block 3 for a description on how the measurement matrix $\Phi$ is defined and the description of block 14 on how it is generated (depending on which other blocks, signals and parameters).

III. IMPLEMENTATION EXAMPLE FOR A PREFERRED EXAMPLE

In the following, one example implementation of the preferred example is given to illustrate the choice of the parameters. A simple line of sight (LOS) scenario is chosen for this measurement setup. Two suitable antennas are connected to the transmit (23) and receive (24) signal ports respectively and oriented such that the path loss is minimal for a given distance. The space between the antennas can be referred to as channel, rendering this arrangement a channel sounding measurement setup. The system-under-test (4) therefore may comprise, e.g., a chain of three sub-blocks: the transmitting antenna, the channel, and the receiving antenna. Such a measurement setup is well suited for various applications such as non-destructive testing, radio detection and ranging (RADAR), antenna characterization or distance measurements.

LFSRs are chosen as sequence generators for both cases (7) and (8), generating a binary sequence of the symbols {1, -1}, where the internal LFSR state vector symbols $s_i$ map to the generator's output symbols as {0 → 1,1 → -1}. The generators can be parameterized according to the description given in block (7) by two vectors t and s each. The definition parameters for sequence generator 1 (16) may be chosen such that $g_1 = x^{12} + x^{11} + x^7 + x^4 + 1$ and $s_1 = \{1\}^{12}$, which resembles a MLBS of order $k = 12$ and with a period of 4095 chips. The parameters for sequence generator 2 (18) may be chosen such that $g_2 = x^{13} + x^4 + x^3 + x + 1$ and $s_2 = \{1\}^{13}$, giving another MLBS of order $k = 13$ and with a period of 8191 chips. The sequence generator 2 (18) will be reset to its initial state vector at the beginning of every 11th transmit sequence (23), which results in ~5.5 repetitions of the implemented MLBS within one total measurement cycle of 45054 $T_C$. The system performance is not dependent on certain criteria regarding the parameter selection for the sequence generator 2 (18) as long as the columns of the resulting system matrix are linearly independent.

The clock divider blocks (5) and (6) may be both implemented as integer divide-by-N clock dividers with the sample clock divider factor (17) chosen as $S = 117$ and the frame clock divider factor (19) chosen as $M = 385$. For a system clock (20) of $f_c = 9.22$ *GHz* this directly translates to a sampling clock (21) of $f_s \approx 78.8$ MHz and a frame clock rate (22) of $f_{IRF} \approx 205000$ IRFs per second.

Comparing to an implementation featuring the prior art m-Sequence method, the closest divider factor would be $S = 128$, resulting in a sampling clock *off fs* $\approx 72.03$ MHz.

However, due to the fact that the observation frame size $M$ is fixed to the used MLBS' period of 4095 the IRF is only $f_{IRF} \approx 17600$ IRFs per second, which is considerably lower than the rate achieved by the examples. Furthermore, due to the adaptability of the proposed method, $M$ may easily be changed adaptively to achieve one of these effects:

Increase the IRF rate even further if the impulse response of the linear system (4) features low signal diversity;
Decrease the IRF rate to gain either SNR or reconstruction robustness for system responses featuring higher signal diversity.

Moreover, features and functionalities disclosed herein relating to a method can also be used in an apparatus. Furthermore, any features and functionalities disclosed herein with respect to an apparatus can also be used in a corresponding method. In other words, the methods disclosed herein can be supplemented by any of the features and functionalities described with respect to the apparatuses. Also, any of the features and functionalities described herein can be implemented in hardware or in software, or using a combination of hardware and software, as described below.

Depending on certain implementation requirements, examples may be implemented in hardware. The implementation may be performed using a digital storage medium, for example a floppy disk, a Digital Versatile Disc (DVD), a Blu-Ray Disc (registered trademark), a Compact Disc (CD), a Read-only Memory (ROM), a Programmable Read-only Memory (PROM), an Erasable and Programmable Read-only Memory (EPROM), an Electrically Erasable Programmable Read-Only Memory (EEPROM) or a flash memory, having electronically readable control signals stored thereon, which cooperate (or are capable of cooperating) with a programmable computer system such that the respective method is performed. Therefore, the digital storage medium may be computer readable.

Generally, examples may be implemented as a computer program product with program instructions, the program instructions being operative for performing one of the methods when the computer program product runs on a computer. The program instructions may for example be stored on a machine readable medium.

Other examples comprise the computer program for performing one of the methods described herein, stored on a machine-readable carrier. In other words, an example of method is, therefore, a computer program having a program-instructions for performing one of the methods described herein, when the computer program runs on a computer.

A further example of the methods is, therefore, a data carrier medium (or a digital storage medium, or a computer-readable medium) comprising, recorded thereon, the computer program for performing one of the methods described herein. The data carrier medium, the digital storage medium or the recorded medium are tangible and/or non-transitionary, rather than signals which are intangible and transitory. A further example comprises a processing unit, for example a computer, or a programmable logic device performing one of the methods described herein.

A further example comprises a computer having installed thereon the computer program for performing one of the methods described herein.

A further example comprises an apparatus or a system transferring (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some examples, a programmable logic device (for example, a field programmable gate array) may be used to perform some or all of the functionalities of the methods described herein. In some examples, a field programmable gate array may cooperate with a microprocessor in order to perform one of the methods described herein. Generally, the methods may be performed by any appropriate hardware apparatus.

The above described examples are illustrative for the principles discussed above. It is understood that modifications and variations of the arrangements and the details described herein will be apparent. It is the intent, therefore, to be limited by the scope of the impending patent claims and not by the specific details presented by way of description and explanation of the examples herein.

**Claims**

1. An apparatus (100) for estimating an impulse response (30) of a linear system (4),
   wherein the apparatus (100) is configured to generate (7) a transmit signal (23) on the basis of a first sequence,
   wherein the apparatus (100) is configured to obtain a receive signal (24) and to multiply (9) the receive signal (24) with a second sequence (25), to obtain a modified receive signal (26), wherein the second sequence (25) is different from the first sequence,
   wherein the apparatus (100) is configured to analog-to-digital, ADC, convert (11) an integration result (27) in order to obtain a sample value (28), the integration result (27) being based on an integration (10) of the modified receive signal (26) over a period ($T_s$) of time, and
   wherein the apparatus (100) is configured to obtain an estimate (30) of the impulse response on the basis of a plurality (29) of sample values (28).

2. The apparatus (100) of claim 1, wherein the first sequence (23) and the second sequence (25) are generated from a common clock signal (20, $f_c$) and/or are synchronized with a common clock signal (20, $f_c$).

3. The apparatus (100) of claim 2, configured to perform a clock division (5) by dividing the common system clock signal (20) by a first divider factor parameter (17, S) to obtain a sampling clock signal (21, $f_s$) to control the ADC conversion (11) and/or to define the period ($T_s$) of time of the integration (10) of the modified receive signal (26).

4. The apparatus (100) of claim 2 or 3, configured to perform a clock division (6) by dividing the common system clock signal (20, $f_c$), or a clock signal (21, $f_s$) derived from the common system clock signal (20), by a second divider factor parameter (19, M), or a multiple of the second divider factor parameter (19, M), so as to obtain a frame clock signal (22, $f_{IRF}$) to control the processing (15) of the estimation of the impulse response (30) and/or reset the generation of the second sequence (25).

5. The apparatus of any of the preceding claims, wherein the first sequence is generated based on at least one first sequence definition parameter (16) and/or the second sequence (25) is generated based on at least one second sequence definition parameter (18).

6. The apparatus (100) of any of claims 3-5, comprising an automated logic configured to select at least one of the following parameters:

   the first divider factor parameter (17, S);
   the second divider factor parameter (19, M);
   the first sequence definition parameter (16); and
   the second sequence definition parameter (18).

7. The apparatus (100) of claim 6, wherein the automated logic is configured to adaptively define at least one of the parameters based on at least one of a previous estimate (30), a priori knowledge about the linear system (4) and linear system state information (31) as obtained from other sources.

8. The apparatus (100) of claim 7, wherein the automated logic is configured to define the at least one of the parameters on the basis of a Doppler resolution, ambiguity range, number of non-zero components in the system's impulse response (30).

9. The apparatus (100) of any of the preceding claims, configured to measure a distance of an object, wherein the receive signal (23) is, or is associated to, the reflected version of the transmit signal (23),
   wherein the apparatus is configured to measure a distance of the object on the basis of the estimate (30) of the impulse response.

10. An apparatus (100) of claim any of the preceding claims, wherein the first sequence is associated to a first linear signal model (D, 13), and the second sequence (25) is associated to a second linear model ($\phi$, 14), so as to obtain the estimate (30) of the impulse response on the basis of a relationship between the plurality (29, b) of sample values (28), the first linear signal model (D, 13), and the second linear model ($\phi$, 14).

11. The apparatus of claim 10, wherein at least one of the first and second linear models (13, 14) is a circulant linear model.

12. The apparatus of claim 10 or 11, wherein the first and second linear models (13, 14) are described by a first and a second matrixes (D, $\phi$), wherein the product of the first and second matrixes (D, $\phi$) form a linear behavioural model matrix, whose columns are such that any subset of up to K columns is linearly independent, wherein K is a number of unknown values of the impulse response to be determined.

13. The apparatus of claim 12, configured to obtain the estimate (15) the impulse response (30) of the linear system (4) based on knowledge of the behavioural model matrix, by minimizing a sparsity-promoting function that maps its argument to a scalar number which represents the degree of sparsity, under the condition that a product of the linear behavioural model matrix and the reconstructed impulse response vector (30) approximates or equals a sample vector (12, b) defined by the plurality of samples (28).

14. A method (500) for measuring the impulse response of a linear system (4) comprising:

   (502) generating a transmit signal (e.g., 23) on the basis of a first sequence;
   (504) obtaining a receive signal (24);
   (506) mixing the receive signal (24) with another signal (25) based on a second sequence (25);
   (510) analog-to-digitally, ADC, (11) convert the mixed signal (27), or an integrated version thereof;
   (512) estimating (15) the impulse response (30) on the basis of a plurality (29) of digital obtained signals (28).

15. A non-transitory storage unit storing instruction which, when executed by a processor, cause the processor to:

   generate (7) a transmit signal (23) on the basis of a first sequence,
   obtain a receive signal (24) and to multiply (9) the receive signal (24) with a second sequence (25), to obtain a modified receive signal (26), wherein the second sequence (25) is different from the first sequence;
   analog-to-digital, ADC, convert (11) an integration result (27) in order to obtain a sample value (28), the integration result (27) being based on an integration (10) of the modified receive signal (26) over a period ($T_s$) of time; and
   obtain an estimate (30) of the linear system impulse response on the basis of a plurality (29) of sample values (28).

global block diagram

Fig. 1

Fig. 2    detailed block diagram of measurement block (2)

detailed block diagram of processing unit block (3)

Fig. 3

3 periods(P=3), each with 15 chips (N=15), MLBS of order 4 ($2^4$-1)
i.e. P·N=3·15=45

$$T_X = \frac{N}{f_C} = N \cdot T_C$$

$T_X$period
with 15 chips(N=15)

$T_X$period

$T_X$period

sample time
$T_S = 9T_C$
(S=9)

$T_S$

$T_S$

$T_S$

$T_S$

$$f_S = \frac{f_C}{S}$$

observation frame or total measurement cycle
(S·M=N·P) with period $T_{IRF} = S \cdot M \cdot T_C = 45 \cdot T_C$
total number of samples is 5(M=5)

(transmit signal 23 )

first sequence

(25, ADC 11)

second sequence

Fig. 4

EP 3 806 413 A1

Fig. 5

(31)

(16)

(17)

(18)

(19)

(30)

parameter control decision logic (603)

feature extraction (601)

(606)

(605)

(604)

adaptive parameter estimation (602)

(1) parameter control

(102)

Fig. 6

(a) Doppler resolution at an exemplary fixed system frequency $f_c = 7.5$ GHz (20)

Fig. 7 (Part 1)

(b) compression factor and sparsity at fixed TMC and a first sequence (16) period of N = 4095

Fig. 7 (Part 2)

Europäisches
Patentamt

European
Patent Office

Office européen
des brevets

# EUROPEAN SEARCH REPORT

**Application Number**

EP 19 20 1805

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | US 6 272 441 B1 (PEYERL PETER [DE] ET AL) 7 August 2001 (2001-08-07) * column 6 - column 10; figure 1 * ----- | 1-15 | INV. H04L25/02 |
| Y,D | TROPP J A ET AL: "Beyond Nyquist: Efficient Sampling of Sparse Bandlimited Signals", IEEE TRANSACTIONS ON INFORMATION THEORY, IEEE PRESS, USA, vol. 56, no. 1, 1 January 2010 (2010-01-01), pages 520-544, XP011286713, ISSN: 0018-9448, DOI: 10.1109/TIT.2009.2034811 * sections I-A, IV-B, V, V-A; figure 1 * ----- | 1-15 | |
| Y | US 9 532 735 B2 (UNIV KING ABDULLAH SCI & TECH [SA]) 3 January 2017 (2017-01-03) * equations (14) and (15) * ----- | 9 | |

**TECHNICAL FIELDS SEARCHED (IPC)**

H04L

The present search report has been drawn up for all claims

| Place of search | Date of completion of the search | Examiner |
|---|---|---|
| Munich | 3 March 2020 | Vucic, Jelena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 20 1805

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2020

| Patent document cited in search report | | Publication date | Patent family member(s) | | Publication date |
|---|---|---|---|---|---|
| US 6272441 | B1 | 07-08-2001 | DE | 19846870 C1 | 25-01-2001 |
| | | | EP | 0994358 A2 | 19-04-2000 |
| | | | US | 6272441 B1 | 07-08-2001 |
| US 9532735 | B2 | 03-01-2017 | NONE | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19846870
- EP 0994358 A
- US 6272441 B
- US 8836557 B
- US 8717210 B

**Non-patent literature cited in the description**

- **J. A. TROPP et al.** Beyond nyquist: Efficient sampling of sparse bandlimited signals. *IEEE Transactions on Information Theory,* January 2010, vol. 56 (1), 520-544
- **S. W. GOLOMB.** Shift Register Sequences. Aegean Park Press, 1981